# EUROPÄISCHE PATENTSCHRIFT

(11) **EP 3 540 905 B1**
(45) Veröffentlichungstag und Bekanntmachung des Hinweises auf die Patenterteilung: **11.11.2020**
(21) Anmeldenummer: 19163069.8
(22) Anmeldetag: 15.03.2019
(51) Int. Cl.: H02J 7/00

(54) **BATTERIESENSORVORRICHTUNG**
BATTERY SENSING DEVICE
DISPOSITIF DE DÉTECTION DE BATTERIE

(30) Priorität: 15.03.2018 DE 102018106115
(43) Veröffentlichungstag der Anmeldung: 18.09.2019
(73) Patentinhaber: Eaton Intelligent Power Limited, Dublin 4 (IE)
(72) Erfinder: STEINKE, Karsten, 59494 Soest (DE); PRATAP, Naga Vasishta Nudurupati, Secunderabad, Telangana 500061 (IN); MANOJ, Verma, Manjari BK, Pune MH 412307 (IN); MANOJ, Dharap, Baner (Pune) MH 411045 (IN); PRATIK, Narendra Pawar, Dhule MH 424002 (IN)
(74) Vertreter: Grünecker Patent- und Rechtsanwälte PartG mbB

(56) Entgegenhaltungen:
- WO-A1-00/59095
- US-A1- 2007 139 004

## Beschreibung

Die Erfindung betrifft eine Batteriesensorvorrichtung, welche an einem wiederaufladbaren Batterieblock oder an einer wiederaufladbaren Batteriezelle angeordnet ist. Eine solche wiederaufladbare Batterie ist beispielsweise ein wichtiges Element in einem Notlichtsystem.

Notlichtsysteme müssen bei einem Netzausfall sofort einsatzbereit sein und in einem solchen Fall auf eine entsprechende Batterieversorgung zurückgreifen können. Eine solche Batterieversorgung ist in der Regel durch eine Vielzahl von Batterieblöcken gebildet, wobei jeder Batterieblock aus einer Vielzahl von Batteriezellen aufgebaut sein kann. Für jede einzelne Batteriezelle oder jeden einzelnen Batterieblock erfolgt eine entsprechende Überwachung, beispielsweise im Hinblick auf die verfügbare Batteriespannung und die vorliegende Batterietemperatur. Dadurch kann sichergestellt werden, dass die Batterien bestimmte Grenzwerte bezüglich Spannung bzw. Temperatur erfüllen und ansonsten ggf. frühzeitig ein Defekt o. Ä. festgestellt werden kann.

WO 00/59095 A1 beschreibt eine Batteriesensorvorrichtung mit Batterieanschlusselektroden zum Aufladen eines Batterieblocks oder einer Batteriezelle. Die Batterieanschlusselektroden sind über erste und zweite Polverbindungsleitungen mit der Batteriesensorvorrichtung verbunden, wobei beispielsweise eine Batteriespannung messbar ist. Ebenfalls besteht die Möglichkeit einer Temperaturmessung.

US 2007/139004 A1 offenbart in ähnlicher Weise die Merkmale des Oberbegriffs der Patentanspruchs 1.

Erfindungsgemäss wird eine Batteriesensorvorrichtung nach Anspruch 1 bereitgestellt.

Die Batteriesensorvorrichtung ist mit Batterieanschlusselektroden über erste und zweite Polverbindungsleitungen verbunden. Über diese Polverbindungsleitungen kann ebenfalls die Versorgung der Batteriesensorvorrichtung erfolgen. In diesem Zusammenhang werden zumindest die Batteriespannung von Batterieblock oder Batteriezelle und die Batterietemperatur durch die Batteriesensorvorrichtung gemessen.

Um in einfacher und schneller Weise die Batterietemperatur ermitteln zu können, weist die Batteriesensorvorrichtung einen Temperatursensor auf, durch den über nur eine Polverbindungsleitung zu nur einer Batterieanschlusselektrode deren Temperatur, im Folgenden Poltemperatur genannt, messbar ist.

Damit die Temperaturmessung mit möglichst geringer Zeitverzögerung erfolgen kann, ist die nur eine Polverbindungsleitung die erste Polverbindungsleitung, welche kürzer als die zweite Polverbindungsleitung ist. Die erste Polverbindungsleitung zur negativen Batterieanschlusselektrode ist demnach kürzer als die zweite Polverbindungsleitung zur positiven Batterieanschlusselektrode.

Die Temperaturmessung wird dadurch verbessert, dass die erste Polverbindungsleitung einen größeren Querschnitt als die zweite Polverbindungsleitung aufweist. Durch diesen größeren Querschnitt sowie die geringere Länge der ersten Polverbindungsleitung kann die entsprechende Poltemperatur mit wenig Verlusten und zeitnah übertragen werden.

In diesem Zusammenhang kann es sich als günstig erweisen, wenn beispielsweise die nur eine Batterieanschlusselektrode die negative Batterieanschlusselektrode ist.

In diesem Zusammenhang kann es sich weiterhin als vorteilhaft erweisen, wenn der Querschnitt der ersten Polverbindungsleitung 1 - 4 mm², bevorzugt 2 - 3 mm² oder bis zu 6 mm² beträgt.

Als weiterer Vorteil in diesem Zusammenhang kann angesehen werden, wenn ggf. die erste Polverbindungsleitung doppelt isoliert ist.

Um den Temperatursensor vor äußeren Einflüssen zu schützen, kann der Temperatursensor innerhalb eines Gehäuses der Batteriesensorvorrichtung angeordnet sein.

Um weitere Temperaturverluste zu verhindern, kann der Temperatursensor im Wesentlichen direkt mit der ersten Polverbindungsleitung verschaltet oder dieser zugeordnet sein.

Dabei besteht weiterhin die Möglichkeit, dass der Temperatursensor ein Thermistor und insbesondere ein NTC-Widerstand ist. Solche Widerstände werden auch Heißleiter genannt und weisen als wesentliche Eigenschaft beispielsweise einen negativen Temperaturkoeffizienten auf, d. h. sie leiten bei hohen Temperaturen einen elektrischen Strom besser als bei niedrigen Temperaturen. Bei solchen Thermistoren oder NTC-Widerständen ergibt sich eine einfache Integration in gedruckte Schaltungen (PCB), wobei diese Temperatursensoren Bauformen wie Scheiben, SMD-Chips oder zylindrische Form aufweisen und mittels metallisierter Oberflächen der PCB kontaktiert werden können.

Es besteht ebenfalls gemäß Erfindung die Möglichkeit, dass der Temperatursensor ein Kaltleiter, ein insbesondere in der gedruckten Schaltung integrierter Halbleiter-Temperatursensor, ein Thermoelement oder auch ein anderer Temperatursensor ist, der an der beschriebenen Stelle die Temperatur mit ausreichender Genauigkeit und Schnelligkeit messen kann.

In diesem Zusammenhang kann es weiterhin ein Vorteil sein, wenn ein solcher Temperatursensor in der gedruckten Schaltung und insbesondere in einer Leiterbahn der gedruckten Schaltung der Batteriesensorvorrichtung integriert ist.

Um die Wärmeübertragung im Bereich des Temperatursensors zu verbessern, kann in diesem Bereich zwischen entsprechender Leiterbahn und erster Polverbindungsleitung eine Thermopaste oder ein Wärmeleitkleber aufgetragen sein. Die Verwendung eines solchen Materials reduziert den Wärmewiderstand durch ggf. Luftwege. Ein solcher Wärmeleitkleber ist beispielsweise ein Zweikomponentenklebstoff auf Epoxid- oder Silikonbasis. Gegenüber einer Wärmeleitpaste hat ein Wärmeleitkleber in der Regel eine geringere spezifische Wärmeleitfähigkeit. Der Wärmeleitkleber bzw. die Wärmeleitpaste kann auch einen gewissen Füllstoffanteil aufweisen, der in der Regel die Wärmeleitfähigkeit verbessert.

Um insbesondere bei einem Notlichtsystem aber auch bei anderen Systemen mit Batterieversorgung Informationen über entsprechende Parameter der Batterie an eine entfernte Stelle übertragen zu können, kann es sich weiterhin als vorteilhaft erweisen, wenn die Batteriesensorvorrichtung über eine drahtlose Verbindung mit einer Zentraleinrichtung zum Austausch von Informationen verbunden ist. Es kann dadurch von der Zentraleinrichtung eine Messung durch die Batteriesensorvorrichtung initiiert werden, die beispielsweise täglich, wöchentlich oder monatlich stattfinden kann. In anderer Richtung kann entsprechend durch die Batteriesensorvorrichtung eine Übermittlung von Daten erfolgen, die beispielsweise eine verfügbare Batteriespannung, eine vorliegende Batterietemperatur und dergleichen betreffen.

Weiterhin als vorteilhaft kann angesehen werden, wenn ggf. die drahtlose Verbindung eine drahtlose Internet-Verbindung ist.

Es ist allerdings ebenfalls denkbar, dass eine solche drahtlose Verbindung in anderer Weise erfolgt, beispielsweise über Bluetooth, ZigBee, NFC, Wibree, WiMax oder dergleichen. Die Übertragung kann im Radiofrequenzbereich, im infraroten oder optischen Frequenzbereich oder auch in anderen Frequenzbereichen erfolgen.

Die Batterieblöcke oder -zellen sind insbesondere wiederaufladbar und können ebenfalls Akkumulatoren oder dergleichen sein. Mehrere der entsprechenden Zellen oder Blöcke können zusammengeschaltet sein, entweder in Reihenschaltung zur Steigerung der nutzbaren elektrischen Spannung oder in Parallelschaltung zur Steigerung der nutzbaren Kapazität bzw. wegen der Eignung für höhere Stromstärken. Es sind in der Regel verschiedene Akkumulatortypen bzw. Batterietypen einsetzbar, beispielsweise Bleiakkumulatoren, Lithium-Ionen-Akkumulatoren, Natrium-Schwefel-Akkumulatoren oder dergleichen, die je nach Energiedichte und Ladewirkungsgrad zur Speicherung elektrischer Energie auswählbar sind. An dieser Stelle sind nicht alle Akkumulatortypen aufgezählt, die erfindungsgemäß mit der beschriebenen Batteriesensorvorrichtung verwendbar sind. Es sei nur noch auf einen weiteren Akkumulator hingewiesen, der einen Bleiakkumulator mit Überdruckventil darstellt (VRLA-Akkumulator). Dies ist ein Bleiakkumulator mit einer verschlossenen Bauform, der in vielfacher Weise einsetzbar ist.

Erfindungsgemäß ergibt sich durch die Batteriesensorvorrichtung eine zeitnahe Temperaturmessung mit wenig Verlusten. Eine gewisse zeitliche Verzögerung, beispielsweise im Minutenbereich ist erfindungsgemäß tolerierbar, da eine entsprechende thermische Zeitkonstante bei insbesondere in Notlichtsystemen eingesetzten Akkumulatoren oder Batterien im Stunden- oder Tagebereich liegt. Eine Verzögerung im Minutenbereich ist ausreichend zur zeitnahen Temperaturmessung, weil sich bei entsprechenden Batterien die Temperatur nur langsam ändert, da diese thermisch relativ träge sind. Durch Länge und Querschnitt der Polverbindungsleitungen ist sichergestellt, dass beispielsweise thermische Verluste über die Polverbindungsleitung kaum eine Rolle spielen und höchstens Abweichungen zur tatsächlichen Pol- oder Batterietemperatur von weniger als 1°C auftreten. Dies ist für einen Einsatzfall insbesondere in Notlichtsystemen völlig ausreichend.

Im Folgenden wird ein Ausführungsbeispiel der Erfindung anhand der beigefügten Figuren näher erläutert. Dabei zeigen
- Figur 1: eine Prinzipdarstellung einer erfindungsgemäßen Batteriesensorvorrichtung mit einem Batterieblock,
- Figur 2: eine vergrößerte Darstellung eines Teils der Batteriesensorvorrichtung mit Temperatursensor,
- Figur 3A und 3B: alternative Ausführungsbeispiele eines Bereichs einer gedruckten Schaltung der erfindungsgemäßen Batteriesensorvorrichtung,
- Figur 4A und 4B: perspektivische Ansichten eines Gehäuses für die Batteriesensorvorrichtung aus Deckelteil und Bodenteil, und
- Figur 5: eine perspektivische Ansicht eines zusammengesetzten Gehäuses nach Fig. 4A und 4B.

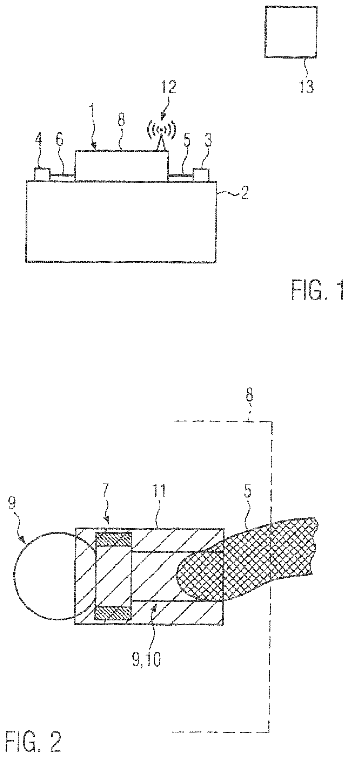

Fig. 1 zeigt eine seitliche Ansicht eines Ausführungsbeispiels einer erfindungsgemäßen Batteriesensorvorrichtung 1. Die Batteriesensorvorrichtung ist in etwa kastenförmig ausgebildet und auf einer Oberseite eines Batterieblocks 2 angeordnet. Statt eines Batterieblocks 2 kann sie auch auf einer Batteriezelle angeordnet sein. Eine solche Batteriesensorvorrichtung 1 kann jedem einer Anzahl von Batterieblöcken 2 zugeordnet sein, wobei dies ebenfalls für jede Batteriezelle gilt. Die Batteriesensorvorrichtung 1 ist mittels einer ersten und einer zweiten Polverbindungsleitung 5, 6 mit entsprechenden Batterieanschlusselektroden 3, 4 verbunden. Über diese Polverbindungsleitungen erfolgt sowohl die elektrische Versorgung der Batteriesensorvorrichtung 1 als auch die Überwachung des zugeordneten Batterieblocks bzw. der zugeordneten Batteriezelle 2. Die erste Polverbindungsleitung 5 ist mit der negativen Batterieanschlusselektrode 3 verbunden und weist eine Länge kürzer als die zweite Polverbindungsleitung 6 zur positiven Batterieanschlusselektrode 4 auf. Weiterhin ist ebenfalls der Querschnitt der ersten Polverbindungsleitung 5 größer als der der zweiten Polverbindungsleitung 6. Es ist ebenfalls möglich, dass beide gleiche Länge und Querschnitt aufweisen. Weiterhin ist zumindest die erste Polverbindungsleitung 5 sowie ggf. auch die zweite Polverbindungsleitung 6 doppelt isoliert. Durch diese entsprechenden Maßnahmen werden über die erste Polverbindungsleitung 5 entsprechende Temperaturen der zugeordneten Batterieanschlusselektrode 3 mit wenig Verlusten zeitnah übertragen. Die Übertragung erfolgt zu einem Temperatursensor 7, siehe auch Fig. 2, der innerhalb eines Gehäuses 8 der Batteriesensorvorrichtung 1 angeordnet ist.

Die Batteriesensorvorrichtung 1 kann entsprechende Daten oder Informationen an eine Zentraleinrichtung 13 drahtlos übermitteln, wozu die Batteriesensorvorrichtung 1 eine entsprechende drahtlose Verbindung 12, beispielsweise in Form einer drahtlosen Internet-Verbindung aufweist. Andere drahtlose bzw. kabellose Übertragungsverfahren sind ebenfalls denkbar, wie Bluetooth, Wlan, ZigBee, NFC, Wibree oder WiMax.

Die Zentraleinrichtung 13 kann in diesem Zusammenhang für eine Mehrzahl entsprechender Batteriesensorvorrichtungen 1 vorgesehen sein, wie es beispielsweise bei einem Notlichtsystem von Vorteil ist. Dadurch sind alle entsprechenden Batterieblöcke bzw. -zellen innerhalb des Notlichtsystems zumindest hinsichtlich Batteriespannung und Batterietemperatur überprüfbar. Es ist ebenfalls möglich, von der Zentraleinrichtung 13 her entsprechende Anweisungen an die Batteriesensorvorrichtung 1 zu übermitteln, wie beispielsweise das Durchführen einer Überprüfung der zugeordneten Batterie oder dergleichen.

In Fig. 2 ist ein vergrößerter Ausschnitt eines Bereichs einer gedruckten Schaltung 9 der Batteriesensorvorrichtung 1 dargestellt, wobei in diesem Fall insbesondere ein entsprechender Temperatursensor 7 angeordnet ist.

Der Temperatursensor 7 ist innerhalb des Gehäuses 8 der Batteriesensorvorrichtung 1 angeordnet und in der gedruckten Schaltung (PCB) bzw. einer Leiterbahn 10 dieser gedruckten Schaltung integriert oder zumindest dort angeordnet. Der Temperatursensor 7 ist insbesondere ein Thermistor, ein NTC-Widerstand oder ein anderer digitaler oder analoger Ausgabe-IC-basierender Sensor, ein Junction-Halbleitersensor oder dergleichen, um nahe der ersten Polverbindungsleitung 5 deren Temperatur und damit eine entsprechende Pol- bzw. Batterietemperatur zu messen. Der Temperatursensor 7 ist nahe einem kreisförmigen Anschlussteil der gedruckten Schaltung und zwischen diesem und einer in Richtung erste Polverbindungsleitung 5 verlaufenden Leiterbahn 10 ausgebildet oder angeordnet. Ein Ende der ersten Polverbindungsleitung 5 ist mit der Leiterbahn 10 der gedruckten Schaltung 9 verbunden, wobei die entsprechenden Übertragungswege zur Temperaturmessung zwischen erster Polverbindungsleitung 5 und Temperatursensor 7 möglichst kurz sind. Um in diesem Bereich Temperaturverluste zu minimieren und gleichzeitig eine Verbindung zwischen Leiterbahn 10 und erster Polverbindungsleitung 5 herstellen zu können, ist eine Thermopaste oder ein Wärmeleitkleber 11 in diesem Bereich aufgetragen.

Bei weiteren Ausführungsbeispielen wird bei der Batteriesensorvorrichtung eine Vielzahl von Temperatursensoren auf der gedruckten Schaltung verwendet. Diese Vielzahl von Sensoren wird zusammen verwendet und deren Ausgaben kombiniert, um ein statistisch besseres Ergebnis zu erhalten. Dadurch werden beispielsweise Herstellungstoleranzen oder andere Variationen der Einzelsensoren kompensiert.

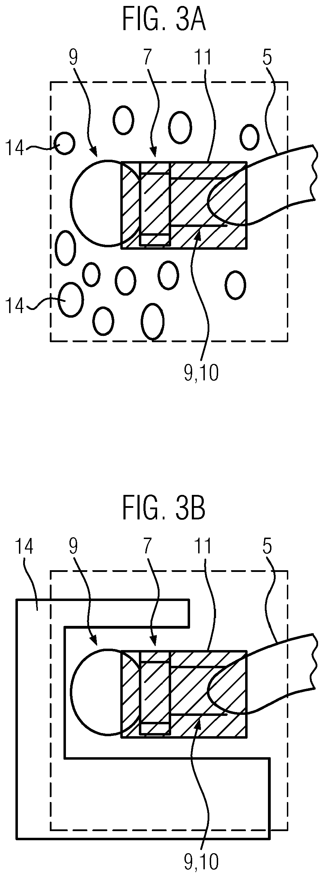

Bei einem weiteren Ausführungsbeispiel ist die gedruckte Schaltung vorgesehen, um eine thermische Isolierung zwischen dem Sensor und wärmeerzeugenden Komponenten zu bilden. Beispielsweise werden diese Komponenten in einer solchen Weise angeordnet, dass ein größerer physischer Abstand auf der gedruckten Schaltung zwischen dem Sensor und den wärmeerzeugenden Komponenten vorgesehen ist. Bei einem Ausführungsbeispiel werden zwischen 30 % und 50 % der gesamten Fläche der gedruckten Schaltung frei gelassen und diese freigelassenen Flächen trennen den Sensor von den wärmeerzeugenden Komponenten. Die thermische Isolierung kann weiterhin verbessert werden durch Anordnen von Löchern oder ausgeschnittenen Bereichen 14, siehe Fig. 3A und 3B. Die entsprechenden Löcher nach Fig. 3A können in freien Bereichen der gedruckten Schaltung analog wie auch der ausgeschnittene Bereich 14 nach Fig. 3B vorgesehen sein. Durch diese Löcher und ausgeschnittenen Bereiche wird ein Wärmeübergang minimiert.

Die oben beschriebenen Lösungen ermöglichen niedrige Kosten der gedruckten Schaltung und kleine Abmessungen, während gleichzeitig ein verbesserter Betrieb möglich ist.

Es ist ebenfalls denkbar, die Kupferdicke, eine Anzahl von Kupferschichten und dergleichen zu reduzieren. Ist beispielsweise die gedruckte Schaltung mit einem drahtlosen Chip ausgestattet, kann die Erdungsplatte verwendet werden, um Interferenzen so zu unterdrücken, dass sie sich nicht bis in die Nachbarschaft der Sensorbereiche erstrecken.

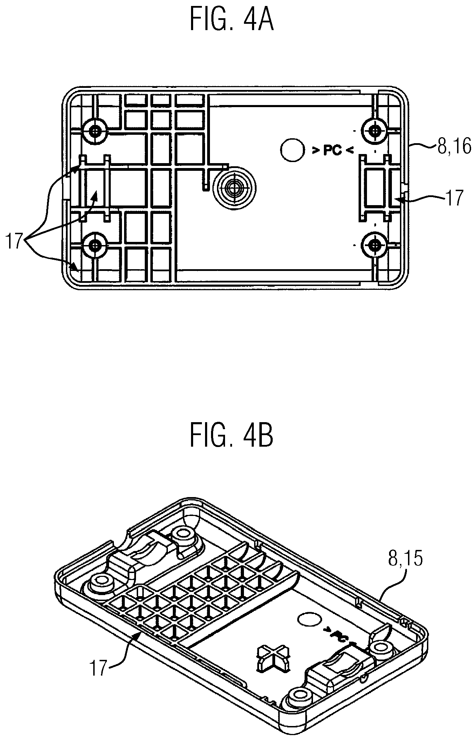

Ebenfalls denkbar ist die Verwendung eines speziell entworfenen Gehäuses für die gedruckte Schaltung, beispielsweise mit einer Rippenstruktur oder dergleichen im Bereich der wärmeerzeugenden Komponenten. Eine solche Rippenstruktur kann gleichzeitig die gedruckte Schaltung abstützen oder auch zwischen den Rippenstrukturen von Deckelteil und Bodenteil des Gehäuses halten. Entsprechende Boden- und Deckelteile sind in den Fig. 4A und 4B dargestellt, mit Rippenstrukturen 17 in einem Bereich derselben. Der Rippenbereich kann auch zwischen dem Temperatursensor und den wärmeerzeugenden Komponenten ausgebildet sein.

Die Rippenstrukturen dienen insbesondere als Wärmeabsorber und geben die durch die wärmeerzeugenden Komponenten erzeugte Wärme über das Gehäuse nach außen ab. Bei einem solchen Ausführungsbeispiel entspricht eine Oberfläche einer Batterie weitestgehend dem Temperaturprofil des negativen Pols und folglich kann das Sensorgehäuse so gestaltet sein, dass es einen maximalen Kontakt der Rippenstrukturen mit der gedruckten Schaltung herstellt. Dies ist insbesondere nützlich während eines Ladens der Batterie, wobei die Poltemperatur typischerweise höher als die Umgebungstemperatur ist. Ist andererseits die Batterie in einem Entlademodus oder ungenutzt, kann die gleiche Rippenstruktur bei der Abgabe von Wärme erzeugt durch andere thermische Quellen auf der gedruckten Schaltung verwendet werden, wodurch insgesamt die Erfassungsgenauigkeit der Sensoren erhöht wird.

Durch solche Lösungen wird ein Wärmefluss von den wärmeerzeugenden Komponenten zu den Sensoren fast vollständig abgeschnitten, und ebenso im Hinblick auf andere verwendete Detektoren.

Diese thermische Isolierung ermöglicht ebenfalls die Anordnung von Umgebungstemperatursensoren auf der gedruckten Schaltung, die beispielsweise zur Temperaturkalibrierung einsetzbar sind.

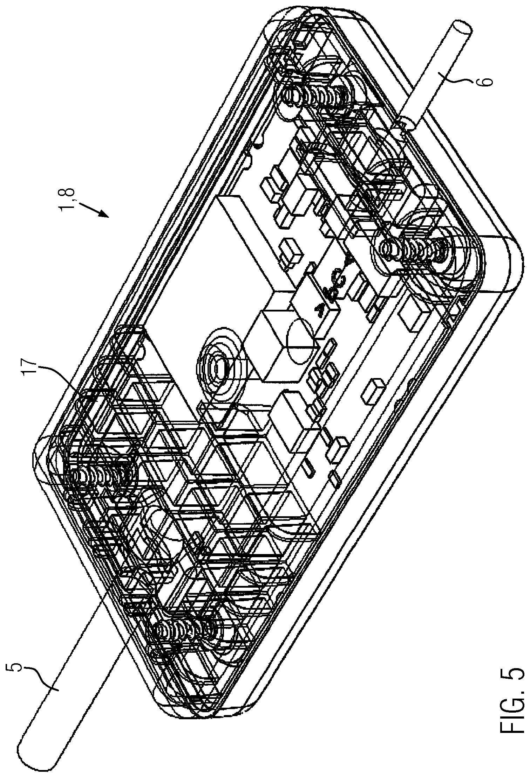

Fig. 5 zeigt eine perspektivische Ansicht eines aus Deckelteil und Bodenteil zusammengesetzten Gehäuses. Die unterschiedlich dicken Verbindungsleitungen werden seitlich in das Gehäuse hineingeführt. In dem Gehäuse befindet sich die gedruckte Schaltung mit Temperatursensoren und anderen elektronischen Komponenten. Das Deckelteil kann dabei transparent sein. Etwa mittig im Deckelteil kann außerdem eine Signalisierungsleuchte angeordnet sein, die beispielsweise einen ordnungsgemäßen Betrieb der Batteriesensorfolie anzeigt.

Erfindungsgemäß erfolgt in einfacher konstruktiver Weise durch nur eine Leitungsverbindung zwischen Batteriesensorvorrichtung und zugehöriger Batterie eine zeitnahe Temperaturmessung mit wenig Verlusten, so dass eine relativ hohe Genauigkeit der Temperaturmessung mit gleichzeitig nur geringer Verzögerung der Temperaturmessung im Vergleich zur Temperaturänderung der Batterie erfolgen kann.

## Patentansprüche

1. Batteriesensorvorrichtung (1), welche an einem insbesondere wiederaufladbaren Batterieblock oder an einer insbesondere wiederaufladbaren Batteriezelle (2) angeordnet und mit entsprechenden Batterieanschlusselektroden (3, 4) über erste und zweite Polverbindungsleitungen (5, 6) verbunden ist, wobei zumindest Batteriespannung des Batterieblocks bzw. der Batteriezelle und Batterietemperatur durch die Batteriesensorvorrichtung (1) messbar sind, wobei über nur eine der Polverbindungsleitungen (5, 6) zu einer Batterieanschlusselektrode (3, 4) deren Temperatur durch einen Temperatursensor (7) der Batteriesensorvorrichtung (1) messbar ist,
**dadurch gekennzeichnet, dass**
die nur eine Polverbindungsleitung (5) die erste Polverbindungsleitung ist, welche kürzer als die zweite Polverbindungsleitung (6) ist und die erste Polverbindungsleitung (5) einen größeren Querschnitt als die zweite Polverbindungsleitung (6) aufweist, so dass eine Poltemperatur mit wenig Verlusten und zeitnah übertragbar ist.

2. Batteriesensorvorrichtung nach Anspruch 1, wobei die eine Batterieanschlusselektrode (3) die negative Batterieanschlusselektrode (3) ist.

3. Batteriesensorvorrichtung nach einem der vorangehenden Ansprüche, **dadurch gekennzeichnet, dass** der Querschnitt der ersten Polverbindungsleitung (5) 1 - 4 mm², bevorzugt 2-3 mm² oder bis zu 6 mm² beträgt.

4. Batteriesensorvorrichtung nach einem der vorangehenden Ansprüche, **dadurch gekennzeichnet, dass** zumindest die erste Polverbindungsleitung (5) doppelt isoliert ist.

5. Batteriesensorvorrichtung nach einem der vorangehenden Ansprüche, **dadurch gekennzeichnet, dass** der Temperatursensor (7) innerhalb eines Gehäuses (8) der Batteriesensorvorrichtung (1) angeordnet ist.

6. Batteriesensorvorrichtung nach einem der vorangehenden Ansprüche, **dadurch gekennzeichnet, dass** der Temperatursensor (7) im Wesentlichen direkt mit der ersten Polverbindungsleitung (5) verschaltet bzw. verbunden ist.

7. Batteriesensorvorrichtung nach einem der vorangehenden Ansprüche, **dadurch gekennzeichnet, dass** der Temperatursensor (7) ein Thermistor und insbesondere ein NTC-Widerstand ist.

8. Batteriesensorvorrichtung nach einem der vorangehenden Ansprüche, **dadurch gekennzeichnet, dass** die Vorrichtung eine Mehrzahl von Temperatursensoren (7) zusammen zur Temperaturmessung verwendet.

9. Batteriesensorvorrichtung nach einem der vorangehenden Ansprüche, **dadurch gekennzeichnet, dass** die Vorrichtung eine thermische Isolierung zwischen Sensor (7) und wärmeerzeugenden Komponenten bereitstellt.

10. Batteriesensorvorrichtung nach einem der vorangehenden Ansprüche, **dadurch gekennzeichnet, dass** der Temperatursensor (7) in einer gedruckten Schaltung (9) und insbesondere in einer Leiterbahn (10) der gedruckten Schaltung (9) der Batteriesensorvorrichtung (1) integriert ist.

11. Batteriesensorvorrichtung nach einem der vorangehenden Ansprüche, **dadurch gekennzeichnet, dass** im Bereich des Temperatursensors (7) zwischen Leiterbahn (10) und erster Polverbindungsleitung (5) eine Thermopaste oder ein Wärmeleitkleber (11) aufgetragen ist.

12. Batteriesensorvorrichtung nach Anspruch 11, **dadurch gekennzeichnet, dass** in dem Bereich des Temperatursensors (7) eine Kupferfläche insbesondere in ihrer Dicke verstärkt ist.

13. Batteriesensorvorrichtung nach einem der vorangehenden Ansprüche, **dadurch gekennzeichnet, dass** die Batteriesensorvorrichtung (1) über eine drahtlose Verbindung (12) mit einer Zentraleinrichtung (13) zum Austausch von Informationen verbunden ist, wobei die drahtlose Verbindung (12) insbesondere eine drahtlose Internet-Verbindung ist.

## Claims

1. A battery sensor device (1), which is arranged on a rechargeable battery block or on a rechargeable battery cell (2) and is connected to respective battery electrode terminals (3, 4) via first and second cell connector lines (5, 6), wherein at least a battery voltage of the battery block or the battery cell can be measured by the battery sensor device (1) and wherein via only one of the cell connector lines (5, 6) to the battery electrode terminal (3, 4) the temperature thereof can be measured by a temperature sensor (7) of the battery sensor device (1),
**characterised in that**
the one cell connector line (5) is the first cell connector line, which is shorter than the second cell connector line (6), and the first cell connector line (5) has a larger cross-section than the second cell connector line (6), so that a pole temperature can be transmitted with few losses and with little delay.

2. The battery sensor device according to claim 1, wherein one battery electrode terminal (3) is the negative battery electrode terminal (3).

3. The battery sensor device according to one of the preceding claims, **characterized in that** the cross-section of the first cell connector line (5) is 1 - 4 mm², preferably 2 - 3 mm² or up to 6 mm².

4. The battery sensor device according to one of the preceding claims, **characterised in that** at least the first cell connector line (5) is provided with double insulation.

5. The battery sensor device according to one of the preceding claims, **characterized in that** the temperature sensor (7) is disposed within a housing (8) of the battery sensor device (1).

6. The battery sensor device according to one of the preceding claims, **characterized in that** the temperature sensor (7) is connected substantially directly to the first cell connector line (5).

7. The battery sensor device according to one of the preceding claims, **characterized in that** the temperature sensor (7) is a thermistor and in particular an NTC resistor.

8. The battery sensor device according to one of the preceding claims, **characterised in that** the device uses a plurality of combined temperature sensors (7) for temperature measurement.

9. The battery sensor device according to one of the preceding claims, **characterised in that** the device provides thermal insulation between the sensor (7) and heat generating components.

10. The battery sensor device according to one of the preceding claims, **characterized in that** the temperature sensor (7) is integrated in a printed circuit (9) and in particular in a conductor line (10) of the printed circuit (9) of the battery sensor device (1).

11. The battery sensor device according to one of the preceding claims, **characterized in that** a thermal paste or a thermally conductive adhesive (11) is applied in the region of the temperature sensor (7) between the conductor line (10) and the first cell connector line (5).

12. The battery sensor device according to claim 11, **characterised in that** a copper surface is reinforced in the region of the temperature sensor (7), in particular with regard to its thickness.

13. The battery sensor device according to one of the preceding claims, **characterized in that** the battery sensor device (1) is connected to a central unit (13) via a wireless connection (12) for exchanging information, the wireless connection (12) being a wireless Internet connection.

## Revendications

1. Dispositif formant capteur de batterie (1) qui est agencé au niveau d'un bloc de batterie en particulier rechargeable ou au niveau d'une cellule de batterie en particulier rechargeable (2) et est relié à des électrodes de borne de batterie correspondantes (3, 4) par l'intermédiaire de première et seconde lignes de liaison de pôle (5, 6), dans lequel au moins la tension de batterie du bloc de batterie ou de la cellule de batterie et la température de batterie peuvent être mesurées grâce au dispositif formant capteur de batterie (1), dans lequel ladite température peut être mesurée grâce à un capteur de température (7) du dispositif formant capteur de batterie (1) sur une seule des lignes de liaison de pôle (5, 6) menant à une électrode de borne de batterie (3, 4),
**caractérisé en ce que**
la une seule ligne de liaison de pôle (5) est la première ligne de liaison de pôle, qui est plus courte que la seconde ligne de liaison de pôle (6), et la première ligne de liaison de pôle (5) présente une section transversale supérieure à celle de la seconde ligne de liaison de pôle (6), de sorte qu'une température de pôle peut être transmise avec peu de pertes et en temps réel.

2. Dispositif formant capteur de batterie selon la revendication 1, dans lequel l'électrode de borne de batterie (3) est l'électrode de borne de batterie (3) négative.

3. Dispositif formant capteur de batterie selon l'une quelconque des revendications précédentes, **caractérisé en ce que** la section transversale de la première ligne de liaison de pôle (5) est comprise entre 1 et 4 mm², de manière préférée comprise entre 2 et 3 mm² ou peut représenter jusqu'à 6 mm².

4. Dispositif formant capteur de batterie selon l'une quelconque des revendications précédentes, **caractérisé en ce qu'**au moins la première ligne de liaison de pôle (5) est à double isolation.

5. Dispositif formant capteur de batterie selon l'une quelconque des revendications précédentes, **caractérisé en ce que** le capteur de température (7) est agencé à l'intérieur d'un boîtier (8) du dispositif formant capteur de batterie (1).

6. Dispositif formant capteur de batterie selon l'une quelconque des revendications précédentes, **caractérisé en ce que** le capteur de température (7) est connecté ou est relié de manière essentiellement directe à la première ligne de liaison de pôle (5).

7. Dispositif formant capteur de batterie selon l'une quelconque des revendications précédentes, **caractérisé en ce que** le capteur de température (7) est une thermistance et en particulier une résistance à coefficient de température négatif CNT.

8. Dispositif formant capteur de batterie selon l'une quelconque des revendications précédentes, **caractérisé en ce que** le dispositif utilise une pluralité de capteurs de température (7) en même temps afin de mesurer la température.

9. Dispositif formant capteur de batterie selon l'une quelconque des revendications précédentes, **caractérisé en ce que** le dispositif assure une isolation thermique entre le capteur (7) et les composants générateurs de chaleur.

10. Dispositif formant capteur de batterie selon l'une quelconque des revendications précédentes, **caractérisé en ce que** le capteur de température (7) est intégré dans un circuit imprimé (9) et en particulier dans une piste conductrice (10) du circuit imprimé (9) du dispositif formant capteur de batterie (1).

11. Dispositif formant capteur de batterie selon l'une quelconque des revendications précédentes, **caractérisé en ce qu'**une pâte thermique ou un adhésif thermoconducteur (11) est appliqué dans la région du capteur de température (7) entre la piste conductrice (10) et la première ligne de liaison de pôle (5).

12. Dispositif capteur de batterie selon la revendication 11, **caractérisé en ce qu'**une surface en cuivre, en particulier l'épaisseur de celle-ci, est renforcée dans la région du capteur de température (7).

13. Dispositif capteur de batterie selon l'une quelconque des revendications précédentes, **caractérisé en ce que** le dispositif formant capteur de batterie (1) est relié par l'intermédiaire d'une liaison sans fil (12) à un dispositif central (13) afin d'échanger des informations, dans lequel la liaison sans fil (12) est en particulier une liaison Internet sans fil.
